## Europäisches Patentamt
## European Patent Office
## Office européen des brevets

(19)

(11) Publication number: **0 265 973**
**A1**

(12)
# EUROPEAN PATENT APPLICATION

(21) Application number: 87116016.4

(22) Date of filing: 30.10.87

(51) Int. Cl.⁴: **B60R 1/06**

(30) Priority: 31.10.86 JP 166701/86

(43) Date of publication of application:
04.05.88 Bulletin 88/18

(84) Designated Contracting States:
DE FR GB

(71) Applicant: **MURAKAMI KAIMEIDO CO., LTD**
**12-25, Miyamoto-cho Shizuoka-shi**
**Shizuoka 422(JP)**

(72) Inventor: **Kikuchi, Toshiaki**
**1-16, Kitayabe-cho 2-chome**
**Shimizu-shi Shizuoka-ken, 424(JP)**
Inventor: **Mochizuki, Toshihiro**
**13-3, Asahigaoka**
**Fujieda-shi Shizuoka-ken, 426(JP)**
Inventor: **Ito, Yasutoshi**
**1-17, Midori-cho**
**Shizuoka-shi Shizuoka-ken, 420(JP)**
Inventor: **Yamana, Tohru**
**1214-7, Takizawa**
**Fujieda-shi Shizuoka-ken, 426-01(JP)**

(74) Representative: **Riederer Freiherr von Paar zu**
**Schönau, Anton et al**
**Van der Werth, Lederer & Riederer Freyung**
**615 Postfach 2664**
**D-8300 Landshut(DE)**

(54) Adjusting device for rearview mirror.

(57) The adjusting device for a rearview mirror includes a worm mechanism driven by an electric motor in an actuator housing (18, 19), adjusting nuts (26) driven parallel to the axis of the mirror (15) by the rotation of a worm wheel (45), and a spherical bearing (28) formed on the lower surface of a mirror holder (16), the adjusting nuts (26) with spherical pivot engaging with the bearing (28). A pivot screw (51) formed integrally with the worm wheel (45) is formed on the center line of said worm wheel, and the adjusting nut (26) is engaged by the threaded portion (56) of the screw (51). Since the pivot screw (51) and the worm wheel (45) are integrally formed and contained in the housing (18, 19), a dimensional error does not occur between the inner surface of the worm wheel (45) and the end face of the pivot screw (51). Therefore, the number of steps of tuning at the time of assembly is reduced to suppress the fluctuation in a thrust direction to the minimum limit.

FIG. 3

## ADJUSTING DEVICE FOR REARVIEW MIRROR

### FIELD OF THE INVENTION

This invention relates to an adjusting device for a rearview mirror of a motor vehicle. Particularly, the invention relates to an adjusting device for a rearview mirror adapted to hardly cause a pivot screw for supporting the mirror to fluctuate in a thrust direction.

### DESCRIPTION OF THE PRIOR ART

There are various types of devices adapted to automatically control the angle of reflection of a rear-mirror by means of an electric motor. Each of most devices is constructed to swing conically a movable pivot disposed at the end of an adjusting nut along a circular arc with its center at the supporting shaft (the central pivot) of the mirror (for instance, in U.S. Pat. No. 4,498,738). Each of these devices comprises an actuator housing provided by engaging a front housing and a rear housing, two electric motors provided in the actuator housing for tilting the mirror about the vertical and horizontal axis of the mirror, worms fixed to the drive shafts of the electric motors, and a worm wheel rotating in meshing contact with the worm. The worm wheel is provided on the rear housing with its central line, meeting at right angles with the surface of the mirror. A pivot screw rotating integrally with the wheel is inserted in the center of the worm wheel. The pivot screw is formed with a recess of a semi-spherical shape on the bottom surface thereof , and a semi-spherical projection formed at the side of the front housing is fitted in the recess to be supported to swing conically along a circular arc with its center at the pivoting position of the pivot screw. An adjusting nut is in meshing contact with a threaded portion of the pivot screw, the movable pivot P is formed at the end of the adjusting nut to be coupled with the back surface of the mirror holder. Thus, the worm wheel and the pivot screw are rotated through the worms by the electric motors to move the adjusting nut longitudinally, thereby adjusting the angle of inclination of the mirror.

The above-described conventional adjusting device for the rearview mirror contains a number of components necessary to convert the rotation of the pivot screw into the movements of the adjusting nut in the longitudinal directions, to be expensive with low assembling efficiency at the time of manufacturing. The adjusting device of this type is required to be assembled so as not to cause the surface of the rearview mirror to vibrate (fluctuate), and has disadvantages that large fluctuations (plays) feasibly occur in the thrust direction of the pivot screw due to the irregularity (tolerance) in the dimensions of the molded components and the displacement unavoidable at the time of assembling. More specifically, the fluctuations in the thrust direction of the pivot screw are considered to occur due to plays or gaps among assembled rear housing and worm wheel, the front housing and the pivot screw as well as the worm wheel and the screw pivot, and a fair number of steps are necessitated to tune the actuators. In the conventional adjusting device, the inner surface of the worm wheel is formed in semi-spherical shape to swing conically the adjusting nut along a circular arc, and the bottom plate of the pivot screw is slidably engaged with the semi-spherical surface of the worm wheel. Since the contacting position of the semi-spherical surface of the worm wheel with the curved surface of the pivot screw is disposed near the radial line of the semi-spherical surface of the worm wheel, small errors in the dimensions of the components causes the pivot screw to largely fluctuate in the thrust direction and hence turning work to become difficult.

### SUMMARY OF THE INVENTION

It is therefore an object of this invention to provide an adjusting device for the angle of a rearview mirror in which a pivot screw and a worm wheel are integrally formed to reduce the number of components to hardly cause the semi-spherical surface of the pivot screw to vibrate in the thrust direction.

More specifically, this invention provides an adjusting device for a rearview mirror having a worm mechanism driven by an electric motor in an actuator housing, an adjusting nut driven in a direction parallel to the axis of the rearview mirror by the rotation of a worm wheel and a semi-spherical pivot engaged with a spherical bearing formed on the lower surface of a mirror holder and provided at the end of the adjusting nut, comprising a pivot screw formed integrally with the worm wheel along the center line of the worm wheel and engaged at its threaded portion thereof with the adjusting nut.

According to this invention, the pivot screw and the worm wheel of important members in the adjusting device for the rearview mirror are integrally formed. Therefore, the number of components is reduced to diminish the cost. Further, since the pivot screw and the worm wheel are integrally formed and contained in the housing, no error in the gap between the inner surface of the worm wheel and the end face of the pivot screw occurs as in the conventional type, and the number of steps of tuning at the time of assembling is also reduced and the fluctuations in the thrust direction of the pivot screw due to the error in the dimensions of the components can hardly take place, and hence the surface of the rearview mirror is prevented in advance from vibrating.

BRIEF DESCRIPTION OF THE DRAWINGS

A preferred embodiment of the invention is set fourth in the following description and shown in the drawings and is particularly and distinctly pointed out and set fourth in the appended claims.

Fig. 1 is a front view of a rearview mirror according to an embodiment of the present invention;

Fig. 2 is a sectional view taken along the line II-II of Fig. 1;

Fig. 3 is an enlarged sectional view of the essential portion of the adjusting device of the invention;

Fig. 4 is a partially cutaway front view showing an essential portion of a drive transmission used for this invention; and

Fig. 5 is a bottom view of the drive transmission.

DESCRIPTION OF THE PREFERRED EMBODIMENTS

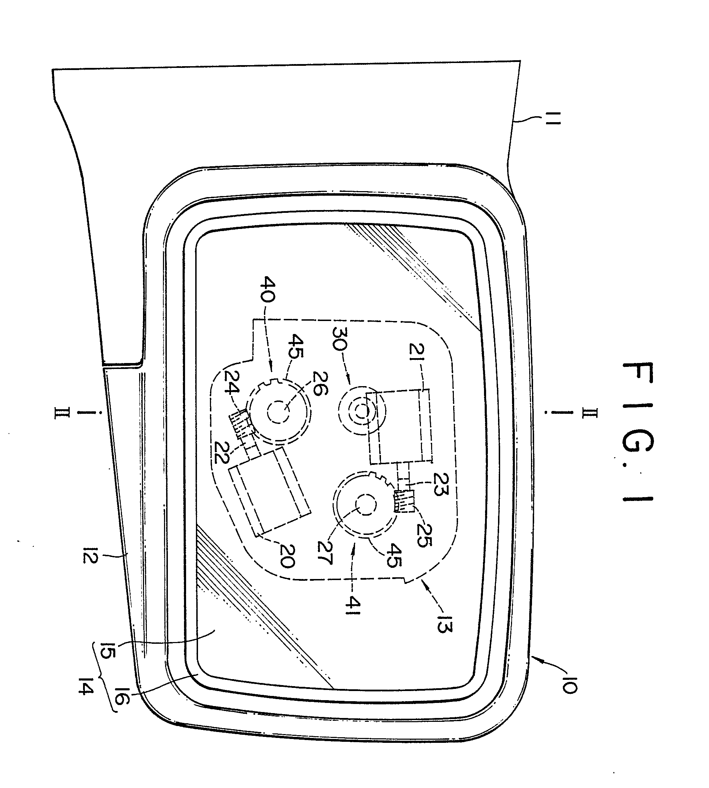

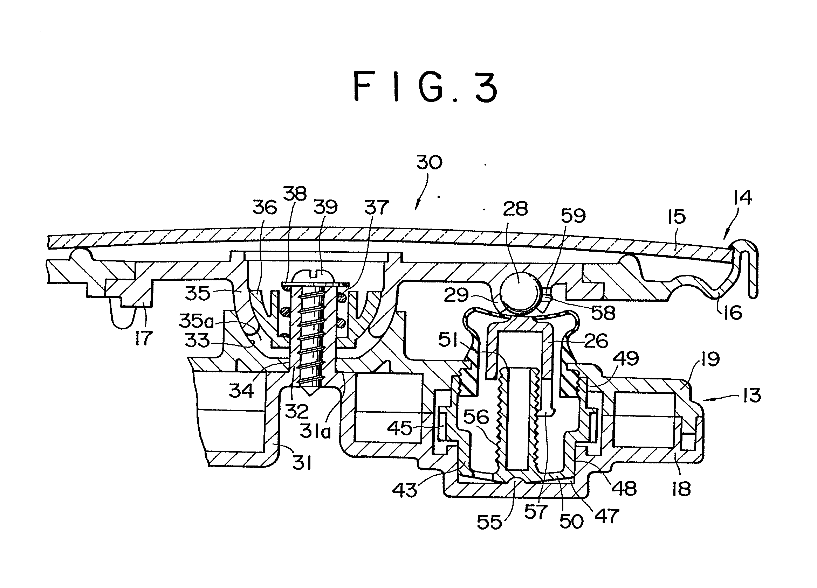

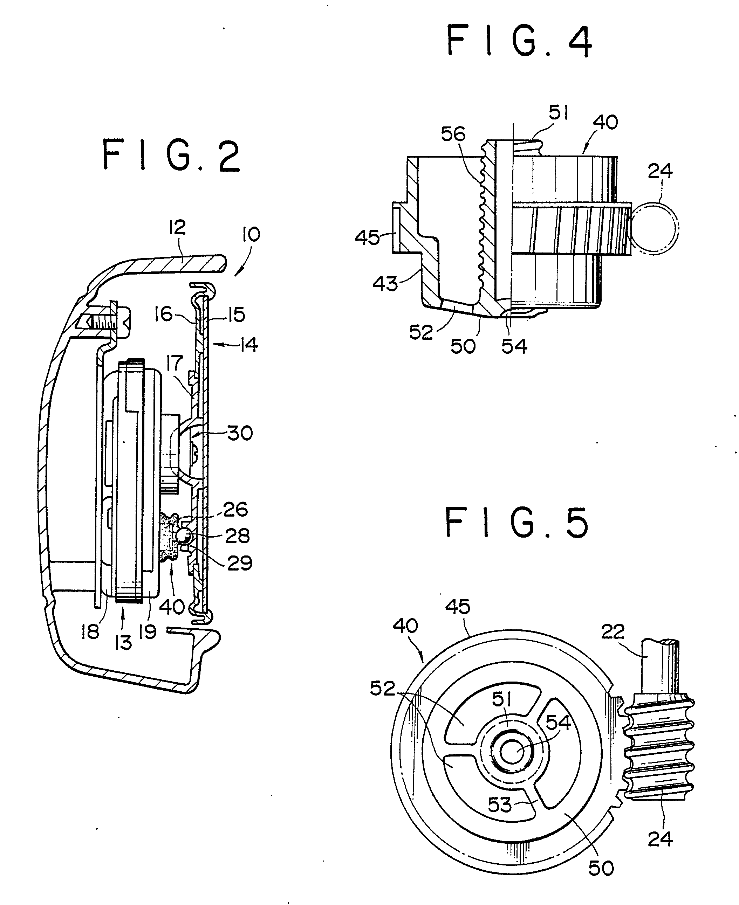

A remote controlled electric motor operated mirror assembly 10 is shown in Figs. 1 and 2, embodying the present invention.

The assembly 10 includes a stay 11 fixedly secured to the outboard of a motor vehicle, a mirror body 12 rotatably mounted on said stay 11, an actuator unit 13 set in said mirror body 12, and a mirror element 14 mounted adjustably at an angle of inclination thereof in front of the actuator unit 13. The mirror element 14 comprises a mirror plate 15, a mirror holder 16 for holding the mirror plate 15, and a pivot plate 17 mounted removably at the center of the mirror holder 16.

The actuator unit 13 engages, as shown in Fig. 2, separably a front housing 18 and a rear housing 19, and contains therein two sets of electric motors 20 and 21, and drive transmissions 40 and 41, respectively. Double socket type supporting means 30 is provided, as described below, at the center of the rear housing 19 to support the mirror element 14. The drive transmissions 40 and 41 are disposed in the housings at the positions separated at a predetermined distance perpendicularly from the supporting means 30. Adjusting nuts 26 and 27 are mounted in the drive transmissions 40 and 41, respectively, and pivots 28 formed at the ends of the adjusting nuts 26 and 27 are engaged with semi-spherical bearings 29 formed on the back surface of the pivot plate 17.

When one of the electric motor is rotated normally or reversely, the adjusting nut 26 or 27 moves back and forth through the drive transmissions 40 or 41 to thereby adjusting the vertical angle and horizontal angle of reflection of the rearview mirror.

The supporting means 30 will be described in detail.

As shown in Fig. 3, a cylindrical portion 31 with the height corresponding to the distance between each inner surface of the front housing 18 and the rear housing 19 is provided, and a threaded cylinder 32 having an internally threaded hole is projected integrally from the center of the cylindrical portion 31. The threaded cylinder 32 is penetrated via a through-hole 34 of a semi-spherical bearing 33 formed on the rear housing 19, the lower surface of the bearing 33 is contacted with the shoulder part 31a of the cylindrical portion 31, and the threaded cylinder 32 is projected upwards from the center of the bearing 33. A hollow semi-spherical pivot 35 having a through-hole 35a at the top thereof is formed at the center of the pivot plate 17, and a semi-spherical cap 36 having a through-hole at the center is engaged within the pivot 35 to form a double spherical socket structure. The threaded cylinder 32 is inserted into the through-hole of the cap 36 engaged with the semi-spherical pivot 35 of the pivot plate 17, a spring 37 is mounted compressively on the threaded cylinder 32, and a spring retainer 38 disposed at the top of the threaded cylinder 32 is secured fixedly by a tapping screw 39 to the threaded cylinder 32.

Thus, the mirror element 14 is so provided by the elasticity of the spring 37 that the hollow semi-spherical pivot 35 is strongly pressed on the bearing 33 of the actuator unit and the lower surface of the bearing 33 is pressed on the shoulder part 31a formed on the front housing 18 in such a manner that the mirror element 14 is mounted tiltably by the suitably clamping torque.

The drive transmissions will be described in detail. The drive transmissions 40 and 41 for adjusting the vertical angle and horizontal angle of the mirror are disposed, as shown in Fig. 1, within the actuator unit 13 at the position separated at a distance perpendicularly with its apex at the central supporting means 30. The drive transmissions 40 and 41 comprise worms 24 and 25 fixedly secured to the output shafts 22 and 23 of the electric motors 20 and 21, and cylindrical members 43 having worm wheels 45, respectively.

Since the drive transmissions have the same structure for adjusting the vertical angle and horizontal angle or the mirror, the transmission 40 for adjusting the vertical angle of the mirror will be described, and the description of the other will be omitted.

As shown in Fig. 3, the cylindrical member 43 is disposed between the inner wall 48 of a recess 47 formed on the front housing 18 of the actuator unit 13 and the annular wall 49 of the rear housing 19 side. The cylindrical member 43 is formed slightly smaller than the effective inner height of the housing at the position of the recess 47 and the diameters of the inner wall 48 and the annular wall 49, and is rotatably supported so that a slight gap or play is provided between the opposed housings 18 and 19.

The cylindrical member 43 is, as shown in Figs. 4 and 5, formed with a worm wheel 45 engaging with the worm 24 on the outer periphery thereof, and also with a pivot screw 51 extending upwards from the center of the bottom plate 50. The worm wheel 45 and the pivot screw 51 are disposed on the same axis.

The bottom plate 50 is relatively thin, and formed with three sector-shaped apertures 52 opened at three positions on the same circle and with three slender radial coupling members 53 between adjacent apertures 52. The screw 51 is coupled at its root through the coupling members 53 flexibly with the body of the cylindrical member..

The bottom plate 50 is formed as a conical unit having a large vertex angle, and a semi-spherical recess 54 is formed on the vertex to be engaged with a semi-spherical projection 55 formed at the center of the recess 47 of the front housing 18, as shown in Fig. 3. The screw 51 is inclined at the time of adjusting the angle of the mirror,with the engaged pivot position as a fulcrum. The body of the cylindrical member, the bottom plate 50 and the pivot screw 51 are integrally molded with polyacetal resin.

The threaded portion 56 of the pivot screw 51 is inserted, as shown in Fig. 3, into the adjusting nut 26. The adjusting nut 26 is formed with a plurality of catches 57, which are engaged with the threaded portion 56 of the pivot screw. The adjusting nut 26 has at the upper end a pivot 28 engaging with the socket 29 of the pivot plate 17 as described above. The pivot 28 has an anti-rotation projection 58 slightly projected sidewisely, which is engaged with the slit 59 of the socket 29 side (Fig. 3). Since the adjusting nut 26 is so engaged with the pivot plate 17 as to be anti-rotation state, the adjusting nut 26 moves back and forth in the longitudinal direction of the mirror to thereby adjust the angle of reflection of the mirror when the reversible electric motor is rotated normally or reversely to drive the worm wheel 45 by the worm 24.

## OPERATION

When the adjusting device for the rearview mirror of this invention is used, the control of the vertical or horizontal angle of the mirror is first selected, and a switch (not shown) is operated in response to the selection. For the instance, the case of adjusting the vertical angle of the mirror is described below.

When the electric motor 20 is rotated normally or reversely by the operation of the switch, the body of the cylindrical member 43 integral with the worm wheel and the pivot screw 56 are rotated by the rotation of the worm wheel 45 in meshing contact with the worm 24 at the end of the output shaft 22. In this case, since the worm wheel and the pivot screw are integrated through the bottom plate 50 or the coupling members 53, the fluctuation of the pivot screw in the thrust direction .is suppressed to the minimum limit.

The adjusting nut 26 engaged with the pivot screw 56 to be anti-rotated moves back and forth axially (in the longitudinal direction of the mirror) by the rotation of the pivot screw 56, and the angle of reflection of the mirror in the vertical direction is adjusted. To adjust the angle of reflection of the mirror in the horizontal direction, the electric motor 21 is driven, and the other adjusting nut 27 is moved back and forth.

Since the vibration of the adjusting nut in a direction perpendicular to the axis of the nut,while the adjusting operation as described above is absorbed by the thin bottom plate 50 having flexibility of the cylindrical member 43,to be substantially removed, a noise due to fluctuations produced by the vibration is also prevented.

When the disposed front surface of the mirror at a position off from the supporting means 30 is pressed by a finger separately from the drive of the electric motor in the adjusting device for the rearview mirror, the catches 57 of the adjusting nuts 26, 27 are forcibly extended to slide on the threaded portion 56 of the pivot screw 51 and to move back and forth. Thus, the angle of reflection of the mirror can be adjusted directly by hand.

**Claims**

1. An adjusting device for a rearview mirror comprising:
   a stay (11);

a mirror body (12) supported by said stay (11);

a mirror element (14) with a reflecting surface; and

an actuator unit (13) fixedly secured in said mirror body (12);
characterized in that

said actuator unit (13) has: means (30) for supporting said mirror element (14) at approximately the center thereof, two electric motors (20, 21), adjusting nuts (26, 27) with movable pivots (28), and drive transmissions (40, 41) for converting the rotations of the electric motors (20, 21) into the back and forth movements of the adjusting nuts (26, 27);

said drive transmissions (40, 41) each having a worm (24, 25) secured to the output shaft (22, 23) of the electric motor (20, 21), and a cylindrical member (43) with a worm wheel (45) in meshing contact with the worm (24, 25), a pivot screw (51) formed integrally coaxially with said worm wheel (45) erected at the center of said cylindrical member (43), the threaded portion (56) of said pivot screw (51) in meshing contact with the adjusting nut (26).

2. The adjusting device as claimed in claim 1, characterized in that said actuator unit (13) comprises a housing engaged with a front housing (18) and a rear housing (19), the mirror element supporting means (30) is formed approximately at the center of said rear housing (19), two drive transmissions (40, 41) are disposed in the housing at positions separated perpendicularly with their center as said mirror element supporting means (30), two electric motors (20, 21) drive the drive transmissions (40, 41), and the adjusting nuts (26, 27) are respectively attached to be movable in backward and forward direction at the centers of the drive transmissions (40, 41).

3. The adjusting device as claimed in any of claims 1 and 2, wherein said mirror element (14) comprises a mirror plate (15), a mirror holder (16) for supporting the mirror plate (15), and a pivot plate (17) engaged with the center of the mirror holder (16), characterized in that said pivot plate (17) has a hollow semi-spherical pivot (35), engaging said supporting means (30), at the center thereof and a pair of sockets (28, 29) engaging the ends of the adjusting nuts (26, 27) projected from the actuator unit (13) sides at the positions separated perpendicularly with respect to its center at the pivot (35).

4. The adjusting device as claimed in any of claims 1 to 3, characterized in that said drive transmission (40, 41) comprises, besides the worm (24, 25) secured to the output shaft (22, 23) of the electric motor (20, 21) and the cylindrical member (43) formed with the worm wheel (45) on the outer periphery thereof, a bottom plate (50) of the cylindrical member (43), the pivot screw (51) which with its threaded portion (56) is engaged by the adjusting nut (26, 27) being erected at the center on the bottom plate (50).

5. The adjusting device as claimed in claim 2 or in claims 3 or 4 if referred to claim 2, characterized in that said front housing (18) comprises a recess (47) for containing the cylindrical member (43), and said recess (47) comprises at the center thereof a semi-spherical projection (55) for pivotally supporting the center of the bottom of the cylindrical member (43).

6. The adjusting device as claimed in claim 5 referred to claim 4, characterized in that the bottom plate (50) of said cylindrical member (43) is formed as a thin conical unit with large vertex angle, and formed with a semi-spherical recess to be engaged with the semi-spherical projection (55) at the vertex thereof.

17. The adjusting device as claimed in claim 6, wherein said bottom plate (50) comprises a plurality of sector-shaped apertures (52), and the body of the cylindrical member (43) is coupled flexibly with the pivot screw (51) by at least one radial coupling member (53) formed between adjacent apertures (52).

FIG. 1

# FIG. 3

0 265 973

F I G . 4

F I G . 2

F I G . 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | DE-A-2 502 188 (REITTER & SCHEFENACKER KG) * Page 7, line 6 - page 8, line 14; figures 1-4 * | 1 | B 60 R 1/06 |
| A | | 2-4,7 | |
| Y | PATENT ABSTRACTS OF JAPAN, vol. 10, no. 21 (M-449)[2078], 28th January 1986; & JP-A-60 179 349 (KOITO SEISAKUSHO K.K.) 13-09-1985 | 1 | |
| A | IDEM | 2-4,7 | |
| D,A | US-A-4 498 738 (KUMAI) * Whole document * | 1-7 | |
| A | US-A-4 202 603 (MIYAUCHI) * Column 5, line 60 - column 6, line 23; figures 4,6,7 * | 1-7 | |

TECHNICAL FIELDS SEARCHED (Int. Cl.4)

B 60 R

The present search report has been drawn up for all claims

| Place of search | Date of completion of the search | Examiner |
|---|---|---|
| THE HAGUE | 01-02-1988 | MAUSSER,T. |